# DEMANDE DE BREVET EUROPEEN

(11) **EP 4 254 968 A1**
(43) Date de publication de la demande: **04.10.2023**
(21) Numéro de dépôt: 23163962.6
(22) Date de dépôt: 24.03.2023
(51) Int. Cl.: H04N 21/2668, H04N 21/458, H04N 21/231, H04N 21/258, H04N 21/45, H04N 21/2187

(54) **PROCÉDÉ DE GÉNÉRATION D'UNE CHAÎNE DE TÉLÉVISION VIRTUELLE POUR UN UTILISATEUR D' AU MOINS UN SERVICE DE DIFFUSION DE CONTENUS AUDIOVISUELS, DISPOSITIF DE GÉNÉRATION, ÉQUIPEMENT DE SERVICE ET PROGRAMME D ORDINATEUR CORRESPONDANTS**

(30) Priorité: 30.03.2022 FR 2202875
(71) Demandeur: Orange, 92130 Issy-les-Moulineaux (FR)
(72) Inventeur: RIVOALEN, Mathieu, 92326 CHATILLON (FR); MARCHAND, Hervé, 92326 CHATILLON (FR)
(74) Mandataire: Vidon Brevets & Stratégie

(57) **Abrégé**

L'invention concerne un procédé de génération d'une chaîne de télévision virtuelle pour un utilisateur d'un terminal configuré pour accéder à au moins un service de diffusion de contenus audiovisuels, ces contenus audiovisuels comprenant des contenus audiovisuels en cours de diffusion. Le procédé comprend :
- une sélection, parmi une pluralité de contenus audiovisuels en cours de diffusion, et accessibles depuis le terminal de l'utilisateur par ledit au moins un service, d'un contenu audiovisuel en cours de diffusion, en fonction d'au moins un critère de sélection et d'informations descriptives associées auxdits contenus audiovisuels en cours de diffusion;
- lorsqu'aucun contenu audiovisuel en cours de diffusion n'est sélectionné, une sélection, parmi au moins une autre pluralité de contenus audiovisuels, et accessibles depuis le terminal de l'utilisateur par ledit au moins un service, d'au moins un autre contenu audiovisuel, en fonction dudit au moins un critère de sélection et d'informations descriptives associées auxdits contenus audiovisuels;
- sur réception d'une demande d'accès à la chaîne de télévision virtuelle en provenance du terminal de l'utilisateur, une transmission, en vue de sa restitution par le terminal de l'utilisateur comme programme de la chaîne virtuelle :
(i) du contenu audiovisuel en cours de diffusion, lorsqu'un contenu audiovisuel en cours de diffusion a été sélectionné; et
(ii) dudit au moins un autre contenu audiovisuel sinon.

## Description

### Domaine technique de l'invention

La présente invention se rapporte de manière générale aux télécommunications, et plus précisément à l'accès à des contenus audiovisuels. Elle s'applique plus particulièrement à des terminaux utilisateurs et/ou à des équipements de service, manipulant de tels contenus.

### Art antérieur

Il existe aujourd'hui une offre riche et variée de services de diffusion de contenus audiovisuels pour un utilisateur. A travers un équipement de diffusion, comme par exemple la télévision sur IP (« *Internet Protocol Television* » en anglais), l'utilisateur peut accéder à de nombreux contenus multimédias : diffusés aux créneaux horaires indiqués dans une grille de programmes télévisuels (par exemple des retransmissions d'événements qui ont lieu en direct (ou « *Live* » en anglais), ou plus largement, des contenus programmés par une chaîne télévisuelle), en rediffusion (« *replay* » en anglais), enregistrés, à la demande (« VOD » ou « SVOD » pour « *Video On Demand* » et « *Subscription Video On Demand »* en anglais).

Des chaînes de télévision publiques ou privées accessibles par la télévision numérique terrestre, ou TNT, la télévision par câble ou par satellite, proposent de façon traditionnelle des programmes audiovisuels, qu'elles diffusent selon une grille de programmes télévisuels. Ces programmes audiovisuels peuvent bénéficier pendant leur diffusion d'une fonctionnalité de reprise depuis le début (« *Start Over* » en anglais). Ainsi, lorsque l'utilisateur prend un programme audiovisuel en cours de diffusion, il a alors la possibilité de revenir en arrière et reprendre la visualisation au début du programme.

En complément, beaucoup de chaînes de télévision mettent aujourd'hui à disposition de l'utilisateur un service de rediffusion de programmes audiovisuels (ou « *replay* », en anglais) pendant une période donnée, par exemple un mois après la date de diffusion de ce programme prévue par la grille de programmes. De la sorte, l'utilisateur peut encore accéder en mode téléchargement en continu (ou « *streaming* », en anglais) à un contenu audiovisuel dont il a raté la diffusion, au moment où il le souhaite pendant cette période donnée.

Certaines de ces chaînes sont dites généralistes, parce qu'elles proposent des programmations variées, destinées à tous types de publics et adaptées en fonction du créneau horaire et du type d'audience le plus représenté sur ce créneau horaire. D'autres sont dites thématiques, car spécialisées dans un thème particulier, comme le sport, les voyages, la culture, l'actualité, le jeune public, etc.

Depuis quelques années, on connaît aussi des plateformes de diffusion de contenus audiovisuels qui proposent à leurs utilisateurs abonnés un large catalogue de contenus audiovisuels, de type séries, films ou documentaires, disponibles à la demande.

On comprend qu'aujourd'hui, l'utilisateur dispose d'une offre de contenus audiovisuels quasiment pléthorique. Cette grande diversité est intéressante, mais pose des problèmes de recherche et de navigation pour sélectionner, en fonction de ses goûts et de ses envies du moment, le meilleur contenu audiovisuel disponible à un instant donné.

En effet, actuellement, ces contenus audiovisuels sont accessibles de manière individuelle, c'est-à-dire que l'accès aux contenus audiovisuels reste à la main de l'utilisateur qui doit explicitement sélectionner un contenu. Autrement dit, lorsque l'utilisateur souhaite accéder à un contenu multimédia, il doit naviguer parmi les différents contenus audiovisuels (par exemple à travers une mosaïque de chaîne télévisuelle, ou dans un catalogue de vidéo à la demande) pour afficher un contenu audiovisuel de son choix, ou sélectionner une vidéo à la demande pour la visualiser. Cette sélection de contenu audiovisuel se fait essentiellement à travers la consultation par l'utilisateur d'informations de description, ou métadonnées, associées au contenu lui-même (par exemple : titre, description, catégorie, type de contenu tel que live ou VOD, durée, qualité vidéo ...).

En outre, une chaîne de télévision proposée par un opérateur de services, qu'elle soit thématique ou généraliste, ne correspond jamais exactement aux attentes d'un utilisateur particulier.

Il existe donc un besoin d'une solution pour aider l'utilisateur à sélectionner facilement le meilleur contenu disponible à un instant donné. L'invention vient améliorer la situation.

### Exposé de l'invention

L'invention répond à ce besoin en proposant un procédé de génération d'une chaîne de télévision accessible depuis un terminal configuré pour accéder à au moins un service de diffusion de contenus audiovisuels, lesdits contenus audiovisuels pouvant être des contenus audiovisuels dont des contenus en cours de diffusion.

Un tel procédé comprend :
- une sélection d'un contenu audiovisuel en fonction d'au moins un critère de sélection et d'informations descriptives associées auxdits contenus audiovisuels; le contenu audiovisuel sélectionné étant prioritairement un contenu en cours de diffusion ;
- un ajout du contenu sélectionné à la chaîne de télévision.

Plus précisément, l'invention consiste lorsqu'aucun contenu audiovisuel en cours de diffusion n'est sélectionné en :
- une sélection, parmi une pluralité de contenus audiovisuels, et accessibles depuis le terminal de l'utilisateur par ledit au moins un service, d'au moins un autre contenu audiovisuel, en fonction dudit au moins un critère de sélection et d'informations descriptives associées auxdits contenus audiovisuels;
- sur réception d'une demande d'accès à ladite chaîne de télévision virtuelle en provenance dudit terminal de l'utilisateur, une transmission, en vue de sa restitution par ledit terminal dudit utilisateur comme programme de ladite chaîne virtuelle :
   (i) dudit contenu audiovisuel sélectionné, s'il est en cours de diffusion; et
   (ii) dudit au moins un autre contenu audiovisuel sinon.

L'invention propose une approche tout-à-fait nouvelle et inventive de la gestion de l'accès à des contenus audiovisuels disponibles pour un utilisateur d'un ou plusieurs services de diffusion de contenus audiovisuels. Elle propose en effet de construire une chaîne de télévision virtuelle pour l'utilisateur en fonction d'un ou plusieurs critère(s) de sélection de contenus audiovisuels.

Par « contenu multimédia », ou « contenu audiovisuel », on entend un contenu numérique qui contient au moins une image, un texte ou une donnée sonore. Le contenu multimédia peut être reçu en diffusion (streaming, chaîne de télévision, de radio, etc) ou stocké sur un support (disque dur, base de données, serveur, etc).

Plus précisément, l'invention consiste à sélectionner parmi des contenus audiovisuels de nature différentes, et accessibles à l'utilisateur, le contenu audiovisuel le plus susceptible d'intéresser l'utilisateur et de le diffuser dans la chaîne virtuelle. Pour cela, la construction de cette chaîne virtuelle est faite à la demande, c'est-à-dire quand l'utilisateur demande effectivement l'accès à cette chaîne, sur la base d'un ou plusieurs critère(s) de sélection et de l'analyse des informations descriptives (ou métadonnées) des contenus audiovisuels accessibles. Autrement dit, ces critères de sélection permettent de faire le tri parmi les contenus audiovisuels accessibles à l'utilisateur, sur la base des informations descriptives de ces contenus audiovisuels, afin de sélectionner ceux qui ont le plus de chance de susciter un intérêt chez l'utilisateur.

Ainsi, lorsque l'utilisateur demande à visualiser cette chaîne virtuelle, par exemple en pressant une touche dédiée de sa télécommande ou en cliquant sur une icône de cette chaîne, le terminal utilisateur reçoit le contenu audiovisuel sélectionné en vue de sa restitution sur un écran du terminal de l'utilisateur, comme un programme de la chaîne de télévision virtuelle.

De la sorte, l'utilisateur n'a pas à naviguer dans l'intégralité de l'offre audiovisuelle disponible, en particulier il n'a pas à zapper sur l'ensemble des chaînes de télévision, pour choisir le contenu audiovisuel qui lui plaît le plus. Au contraire, la chaîne virtuelle lui propose un contenu audiovisuel choisi pour lui plaire ou au moins susceptible d'avoir un intérêt particulier pour lui, auquel il accède sans effort.

En outre, la sélection d'un contenu audiovisuel se fait prioritairement parmi des contenus audiovisuels dont la diffusion, par exemple programmée sur le créneau horaire courant d'une grille de programmes d'une chaîne de télévision, est en cours (par exemple des contenu de type « live » c'est-à-dire dont l'action se déroule au même moment que la retransmission à l'utilisateur, ou des contenus programmés par une chaîne de télévision et en cours de diffusion lorsque l'utilisateur demande à accéder à sa chaîne virtuelle). Avantageusement cela permet de proposer immédiatement à l'utilisateur des contenus audiovisuels qui peuvent l'intéresser et qui sont en train d'être diffusés, au moment de sa demande d'accès à la chaîne virtuelle, mais qui ne seront peut-être plus accessibles ensuite. Dans le cas où aucun contenu en cours de diffusion ne peut être sélectionné (car aucun ne répond au(x) critère(s) de sélection), l'invention propose de se replier sur d'autres types de contenus audiovisuels accessibles qui répondent au(x) critère(s) de sélection. Grâce à cette « réserve » de contenus audiovisuels, l'invention garantit qu'il y a toujours un contenu audiovisuel disponible qui satisfait le(s) critère(s) de sélection et donc que la chaîne virtuelle soit alimentée de manière continue.

Selon une caractéristique de l'invention, le procédé comprend en outre un enregistrement du contenu audiovisuel en cours de diffusion sélectionné, dit contenu audiovisuel diffusé préalablement enregistré, dans une mémoire et en ce que ladite au moins une autre pluralité de contenus audiovisuels comprend le contenu audiovisuel diffusé préalablement enregistré.

Avantageusement, lorsqu'un contenu audiovisuel en cours de diffusion en direct est sélectionné car il répond au(x) critère(s) de sélection, il est enregistré afin d'alimenter une « réserve » de contenus audiovisuels diffusés enregistrés qui vont servir à alimenter en continu la chaîne virtuelle afin que l'utilisateur ne soit jamais à court de contenus à visualiser. En particulier, l'enregistrement des contenus audiovisuels dont la diffusion est programmée permet à l'utilisateur de visualiser des contenus audiovisuels programmés sur des créneaux horaires inadéquats pour l'utilisateur (par exemple à 1 heure du matin, ou pendant les horaires de travail de l'utilisateur) ou bien lorsque plusieurs contenus audiovisuels en cours de diffusion répondant au(x) critère(s) de sélection sont diffusés simultanément sur deux chaînes de programmes distinctes.

Selon une autre caractéristique de l'invention, le procédé comprend en outre une obtention d'au moins un critère de préférence de l'utilisateur, et ledit au moins un critère de sélection comprend ledit au moins un critère de préférence dudit utilisateur.

Avantageusement, selon une mode de réalisation de l'invention, le critère de sélection utilisé pour mettre en oeuvre la sélection du contenu audiovisuel en cours de diffusion ou d'un autre contenu audiovisuel le cas échéant, correspond à des critères de préférence de l'utilisateur.

Par « critère de préférence », on entend une caractéristique ou un ensemble de caractéristiques liées à un contenu audiovisuel et qui définissent une préférence ou un goût de l'utilisateur pour ce contenu audiovisuel. Il s'agit par exemple d'un thème, tel que le sport, les voyages, le cinéma, etc, d'un genre de film, comme une comédie, un thriller, etc, d'un niveau de violence ou d'action selon l'heure du jour ou le jour de la semaine, d'un acteur présent dans le film, etc.

Ainsi, l'utilisateur peut définir un thème qui lui est propre, comme par exemple « automobile Europe » ou « sport sans football » ou bien élargir la définition d'un thème proposé par une chaîne thématique, comme « exploration des fonds marins et voyage ».

Selon une autre caractéristique de l'invention le procédé comprend une détermination d'au moins une thématique, dite récurrente, à partir d'informations descriptives de contenus audiovisuels programmés dans au moins une grille de télévision sur une période temporelle donnée et d'un critère d'occurrence prédéterminé et ledit au moins un critère de sélection comprend ladite thématique récurrente.

Dans un autre mode de réalisation de l'invention, le critère de sélection sur lequel se base la sélection du contenu audiovisuel correspond à une ou plusieurs thématiques dites récurrentes. Autrement dit, la sélection est basée sur l'identification préalable de thématiques récurrentes sur une période temporelle finie.

Par « thématique récurrente », on entend un thème, généralement d'actualité, qui fait l'objet d'une couverture médiatique importante sur une période temporelle donnée, laquelle se traduit par la programmation de plusieurs contenus audiovisuels portant sur la même thématique dans les grilles de programmes télévisuelles accessibles pour l'utilisateur. Cette thématique récurrente peut être liée à un événement médiatique ponctuel, tel qu'un événement sportif (par exemple les « Jeux Olympiques », la « coupe du monde de football » etc.), politique (par exemple l'« élection présidentielle »), culturel (par exemple le « festival de Cannes », le « Carnaval de Rio » etc.), une commémoration etc. Cet événement est limité dans le temps.

Il est ainsi possible de créer des chaînes virtuelles définies en fonction de certaines thématiques que l'on retrouve régulièrement dans les contenus audiovisuels d'une grille de télévision à venir. L'identification d'une thématique récurrente se fait avantageusement par analyse des informations descriptives de contenus audiovisuels à venir, dans une ou plusieurs grilles de programmes associées à une période temporelle futures, par exemple par l'extraction de mots clés.

Un critère d'occurrence est alors prédéterminé pour permettre d'établir à partir de quand une thématique devient récurrente, et à partir de quand cette thématique n'est plus d'actualité. Avantageusement, ce critère d'occurrence prédéterminé est un entier compris entre 0 et N, correspondant à un nombre de fois où l'on retrouve la thématique après analyse des informations descriptives. Par exemple, un certain nombre de fois où des mots clés apparaissent dans les informations descriptives des contenus audiovisuels programmés dans des grilles de programmes télévisuels. Ainsi, on considère qu'à partir d'un certain seuil d'apparition de la thématique (par exemple identification du nombre d'apparition de mots clés) dans les informations descriptives des contenus audiovisuels, alors la thématique revient régulièrement et est donc identifiée comme récurrente. Si au contraire, en dessous de ce seuil d'apparition de la thématique, on considère alors que la thématique n'est pas récurrente ou n'est plus récurrente car elle tend à disparaître des informations descriptives.

Il est alors possible de proposer des thèmes particuliers à l'utilisateur en ce basant sur ces événements médiatiques ponctuels, et de mettre en avant des chaînes virtuelles thématiques proposant des contenus audiovisuels uniquement centrés sur une thématique. L'utilisateur peut donc accéder à une mosaïque de chaînes virtuelles qui sont construites dynamiquement en fonction des thématiques traitées dans les grilles de télévision à venir. Il est possible de construire ainsi plusieurs chaînes virtuelles, chacune basée sur une thématique récurrente.

Avantageusement, ces chaînes virtuelles basées sur des thématiques récurrentes identifiées sont éphémères, c'est-à-dire que leur durée de vie est limitée dans le temps.

Cette limite de temps correspond à la période temporelle sur laquelle la thématique peut être identifiée à partir des informations descriptives des contenus audiovisuels, c'est-à-dire la période temporelle pendant laquelle l'événement médiatique ponctuel a lieu. Cette période de temps peut aller de quelques semaines à plusieurs mois en fonction du type d'événement médiatique. En d'autres termes, une fois que l'événement médiatique ponctuel est terminé, la thématique identifiée tend à disparaître des informations descriptives des contenus audiovisuels et donc la chaîne virtuelle n'est plus alimentée en contenus audiovisuels et n'a donc plus lieu d'être.

Il est ainsi possible de proposer à l'utilisateur des chaînes virtuelles évolutives dans le temps.

En variante, le critère de sélection peut être basé à la fois sur les critères de préférence de l'utilisateur et sur des thématiques récurrentes.

Selon un aspect particulier de l'invention, ladite au moins une autre pluralité de contenus audiovisuels parmi laquelle ladite sélection dudit au moins un autre contenu audiovisuel est mise en oeuvre comprend en outre :
- des contenus audiovisuels disponibles en rediffusion, si aucun contenu audiovisuel en cours de diffusion et aucun contenu audiovisuel diffusé préalablement enregistré ne peut être sélectionné;
- des contenus audiovisuels accessibles à la demande, si aucun contenu audiovisuel disponible en rediffusion ne peut être sélectionné.

Un avantage est d'exploiter toute la diversité de l'offre audiovisuelle disponible pour l'utilisateur via les différents services de diffusion auxquels il a accès. La chaîne virtuelle est alors toujours alimentée par de contenus audiovisuels.

Avantageusement, des niveaux de priorité distincts sont associés aux différents types de contenus audiovisuels formant cette autre pluralité de contenus audiovisuels disponibles. Par exemple, lorsqu'aucun contenu audiovisuel en cours de diffusion ne peut être sélectionné, alors la sélection se fait parmi les contenus audiovisuels diffusés préalablement enregistrés. Si toutefois aucun contenu audiovisuel en cours de diffusion et enregistré ne peut être sélectionné, alors la sélection se fait parmi des contenus disponibles en rediffusion. Si aucun des contenus audiovisuels précédents ne peut être sélectionné, alors la sélection est mise en oeuvre parmi les contenus audiovisuels disponibles à la demande. Autrement dit, les contenus audiovisuels parmi lesquels la sélection est mise en oeuvre sont hiérarchisés selon des priorités de sélection différentes.

Selon un autre aspect particulier de l'invention, le contenu audiovisuel diffusé préalablement enregistré est supprimé de la mémoire lorsqu'au moins une condition de suppression est satisfaite, ladite au moins une condition de suppression appartenant à un groupe comprenant :
- une période temporelle est écoulée ;
- une capacité de stockage de la mémoire est atteinte ;
- le contenu audiovisuel diffusé préalablement enregistré a été restitué par le terminal de l'utilisateur comme programme de la chaîne de télévision virtuelle.

Avantageusement, il est possible d'optimiser l'espace de stockage de la mémoire sur laquelle les contenus audiovisuels sont enregistrés, afin de permettre à la fois d'alimenter en continu la chaine virtuelle, et d'éviter de garder du contenu audiovisuel trop vieux, ou déjà visualisé par l'utilisateur.

L'invention concerne également un dispositif génération d'une chaîne de télévision (100) accessible depuis un terminal configuré pour accéder à au moins un service de diffusion de contenus audiovisuels, lesdits contenus audiovisuels pouvant être des contenus audiovisuels dont des contenus en cours de diffusion.

Ce dispositif est configuré pour :
- sélectionner un contenu audiovisuel en fonction d'au moins un critère de sélection et d'informations descriptives associées auxdits contenus audiovisuels; le contenu audiovisuel sélectionné étant prioritairement un contenu en cours de diffusion;
- ajouter le contenu sélectionné à ladite chaîne de télévision.

Avantageusement, le dispositif est en outre configuré, lorsqu'aucun contenu audiovisuel en cours de diffusion n'est sélectionné, pour :
- sélectionner, parmi au moins une autre pluralité de contenus audiovisuels, et accessibles depuis le terminal de l'utilisateur par ledit au moins un service, au moins un autre contenu audiovisuel, en fonction dudit au moins un critère de sélection et d'informations descriptives associées auxdits contenus audiovisuels;
- sur réception d'une demande d'accès à ladite chaîne de télévision virtuelle en provenance dudit terminal de l'utilisateur, transmettre, en vue de sa restitution par ledit terminal dudit utilisateur comme programme de ladite chaîne virtuelle :
   (i) dudit contenu audiovisuel sélectionné, si il est en cours de diffusion; et
   (ii) dudit au moins un autre contenu audiovisuel sinon.

Avantageusement, le dispositif est en outre configuré pour enregistrer le contenu audiovisuel en cours de diffusion sélectionné, dit contenu audiovisuel diffusé préalablement enregistré, dans une mémoire et en ce que ladite au moins une autre pluralité de contenus audiovisuels comprend le contenu audiovisuel diffusé préalablement enregistré.

Avantageusement, le dispositif est configuré pour obtenir au moins un critère de préférence dudit utilisateur, et ledit au moins un critère de sélection comprend ledit au moins un critère de préférence dudit utilisateur.

Avantageusement, le dispositif est configuré pour déterminer au moins une thématique, dite récurrente, à partir d'informations descriptives de contenus audiovisuels programmés dans au moins une grille de télévision sur une période temporelle donnée et d'un critère d'occurrence prédéterminé et ledit au moins un critère de sélection comprend ladite thématique récurrente.

L'invention concerne également un équipement de service impliqué dans la mise en oeuvre d'au moins un service de diffusion de contenus audiovisuels à un utilisateur. Cet équipement de service comprend un dispositif de génération d'une chaîne de télévision virtuelle pour ledit utilisateur tel que décrit précédemment.

L'invention concerne également un produit programme d'ordinateur comprenant des instructions de code de programme pour la mise en oeuvre d'un procédé tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé de génération d'une chaîne de télévision virtuelle selon l'invention tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur ou un SSD.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel les programmes sont incorporés, le circuit étant adapté pour exécuter ou pour être utilisé dans l'exécution du procédé précité.

Selon un exemple de réalisation, la présente technique est mise en oeuvre au moyen de composants logiciels et/ou matériels. Dans cette optique, le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.). Par la suite, on entend par ressources tous ensembles d'éléments matériels et/ou logiciels support d'une fonction ou d'un service, qu'ils soient unitaires ou combinés.

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (« firmware » en anglais), etc.

Chaque composante du système précédemment décrit met bien entendu en oeuvre ses propres modules logiciels.

Les différents modes de réalisation mentionnés ci-dessus sont combinables entre eux pour la mise en oeuvre de la présente technique.

### Brève description des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****Fig 1****]** : illustre de façon schématique un exemple de contexte de mise en oeuvre de l'invention ;
**[****Fig 2****]** : illustre de façon schématique un exemple d'architecture d'un dispositif de génération d'une chaîne de télévision virtuelle et d'un dispositif de traitement d'une demande d'accès à cette chaîne virtuelle selon un mode de réalisation de l'invention;
**[****Fig 3****]** : décrit sous forme d'un logigramme les étapes d'un procédé de génération d'une chaîne de télévision virtuelle, selon un premier exemple de réalisation de l'invention ;
**[****Fig 4****]** : décrit sous forme d'un logigramme les étapes d'un procédé de génération d'une chaîne de télévision virtuelle, selon un deuxième exemple de réalisation de l'invention ;
**[****Fig 5****]** : décrit un exemple de structure matérielle d'un dispositif de génération d'une chaîne de télévision virtuelle selon l'invention ; et
**[****Fig 6****]** : décrit un exemple de structure matérielle d'un dispositif de traitement d'une demande d'accès à cette chaîne virtuelle selon l'invention.

### Description détaillée de l'invention

Le principe de l'invention repose sur la génération d'une chaîne de télévision virtuelle pour un utilisateur d'un ou plusieurs services de diffusion de contenus audiovisuels à partir d'un ou plusieurs critère(s) de sélection de ces contenus audiovisuels disponibles, et sur la mise à disposition de cette chaîne virtuelle à l'utilisateur.

Plus précisément, sur réception d'une demande d'accès à la chaîne de télévision virtuelle en provenance de l'utilisateur, une sélection d'un contenu audiovisuel est mise en oeuvre pour la génération de cette chaîne virtuelle. Cette sélection est basée sur un ou plusieurs critère(s) de sélection permettant de faire le tri parmi des contenus audiovisuels de nature différentes disponibles pour cet utilisateur, en utilisant les informations descriptives (ou métadonnées) de ces contenus audiovisuels.

Le contenu audiovisuel sélectionné est alors transmis au terminal de l'utilisateur pour une restitution à l'utilisateur sur un dispositif d'affichage, comme s'il s'agissait d'un programme de cette chaîne personnalisée.

L'invention propose donc de mettre à disposition de l'utilisateur une chaîne de télévision virtuelle spécifiquement construite pour cet utilisateur, et générée à partir d'une sélection parmi l'ensemble des contenus audiovisuels accessibles à l'utilisateur.

L'invention s'applique à tout type de service de fourniture ou de diffusion de contenus audiovisuels mis en oeuvre dans tout type de réseau de télécommunications, à un utilisateur d'un équipement terminal connecté à ce réseau et configuré pour accéder à ce service.

L'invention s'applique tout particulièrement au(x) service(s) de diffusion de contenus audiovisuels mis en oeuvre par un même opérateur de service. Dans ce cas, en effet, les problématiques de droits d'accès de l'utilisateur à tel ou tel contenu audiovisuel sont gérées de manière centralisée par l'opérateur.

Néanmoins, elle s'applique aussi lorsque l'utilisateur a souscrit à plusieurs services de diffusion de contenus audiovisuels auprès de différents opérateurs et à un service d'accès à internet qui lui propose une interface de gestion, pour chaque service de diffusion, de ses droits d'accès à ce service. De la sorte, l'invention peut générer une chaîne de télévision virtuelle pour l'utilisateur à partir de contenus audiovisuels issus de ces différents services de diffusion.

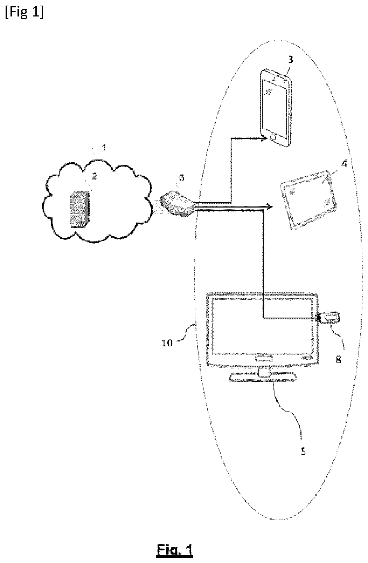

La figure 1 représente le contexte général d'un mode de réalisation de l'invention, dans lequel un système de télécommunication comporte un premier réseau local ou LAN (Local Area Network, 10) et un réseau de type étendu, ou WAN (Wide Area Network, 1). Selon cet exemple non limitatif, le réseau LAN est un réseau domestique et le réseau WAN est un réseau Internet. Plus largement, le réseau LAN 10 pourrait être un réseau d'entreprise et le réseau WAN 1 pourrait être de n'importe quel type (cellulaire, GSM - Global System for Mobile Communications, UMTS - Universal Mobile Telecommunications System, Wifi - Wireless, DVB- Digital Video Broadcast, etc.) sans sortir du cadre de l'invention.

Le terminal 3, par exemple un téléphone intelligent de type « smartphone », le terminal 4, par exemple un ordinateur portable, et le terminal 5, par exemple un téléviseur connecté à une clef HDMI 8, sont situés dans le réseau local (LAN, 10) piloté par une passerelle domestique 6. Le contexte du réseau local est donné à titre d'exemple et pourrait être transposé aisément à un réseau Internet de type « best effort », un réseau d'entreprise, etc.

Un équipement de service 2, impliqué dans la mise en oeuvre d'au moins un service de diffusion de contenus audiovisuels numériques, par exemple un serveur de contenus numériques, se trouve selon cet exemple dans le réseau étendu (WAN, 1) mais il pourrait indifféremment être situé dans le réseau local (LAN, 10), par exemple dans la passerelle domestique 6 ou tout autre équipement capable d'héberger un tel serveur de contenus. Le serveur de contenus 2 reçoit par exemple des chaînes de contenus de télévision numérique en provenance d'un réseau de télévision diffusée, non représenté, et/ou des vidéos à la demande et/ou des contenus de télévision numérique disponibles à la rediffusion en mode rattrapage, et les met à disposition des terminaux clients.

On rappelle qu'un réseau local, aussi appelé dans la suite réseau domestique, est un réseau informatique qui relie ensemble, avec ou sans fils, les équipements terminaux, ou plus simplement terminaux, d'une maison (ordinateurs, périphériques d'impression, de stockage, objets connectés, etc.), aptes à communiquer ensemble. Un tel réseau domestique peut comporter un équipement routeur, aussi communément appelé passerelle, élément intermédiaire assurant la redirection, ou routage, des paquets de données entre les différents terminaux et réseaux qui lui sont connectés. Un utilisateur d'un tel réseau peut exécuter un service donné sur un terminal donné disposant de caractéristiques propres (par exemple, visualiser un contenu multimédia).

Le contenu multimédia peut être, sans perte de généralité, issu d'un réseau de type DVB, IP, etc. On rappelle qu'un réseau numérique diffusé de type DVB (acronyme de « *Digital Video Broadcast* » en anglais, pour diffusion vidéo numérique) dispose d'une infrastructure sous-jacente pouvant avoir pour support le satellite (SAT), la télévision numérique de terre, ou encore le câble, non représentés. Alternativement ou de manière complémentaire, les terminaux pourraient également être connectés à un réseau de type DVB-IP, aussi appelé IPTV, c'est-à-dire assurant la diffusion de télévision numérique ou la fourniture de contenus, par exemple en VOD (Vidéo à la Demande) à partir du réseau Internet sous le contrôle d'un opérateur de service assurant la qualité de la délivrance (par exemple, la TV d'un opérateur, associée à un décodeur numérique et une passerelle domestique du même opérateur). Dans ces deux cas, les contenus numériques multiplexés sont reçus par un décodeur numérique, aussi appelé STB (ou « *Set Top Box* », en anglais), via des supports de réception appropriés (antennes, câbles, ADSL, etc.) et les différents contenus numériques sont dé-multiplexés et décodés avant restitution par les terminaux (e.g. téléviseurs) connectés au décodeur. Un tel décodeur, non représenté sur la figure 1, peut être associé à la passerelle 6 ou directement intégré dans le terminal.

Le terminal peut aussi être prévu pour accéder à des contenus diffusés en mode continu sans téléchargement, ou « streamés » à partir du WAN ou du LAN. On parle, dans ce cas, de télévision « connectée », c'est-à-dire que le terminal peut être raccordé au réseau Internet afin de fournir un ensemble de services aux utilisateurs. Si la restitution ne s'effectue pas sous le contrôle d'un opérateur de service, on parle aussi dans ce cas de contenus de type OTT (ou « *Over The Top* », en anglais). La télévision OTT permet à un utilisateur d'un terminal connecté au réseau Internet de restituer des chaînes numériques ou des contenus Web sur le téléviseur. Généralement, ce type de terminal « connecté » s'interface avec la passerelle en charge du réseau local de l'utilisateur pour accéder à un serveur de contenus dans le réseau étendu. Enfin, un tel terminal peut accéder à des contenus numériques depuis l'intérieur de réseau local, par exemple depuis un dispositif de streaming associé à un disque dur local (non représenté). Dans la suite, on parle indifféremment de contenu multimédia pour des contenus reçus à partir d'un réseau de diffusion (DBV, IPTV), en OTT, et/ou via un téléchargement (streaming, téléchargement de fichier, etc.).

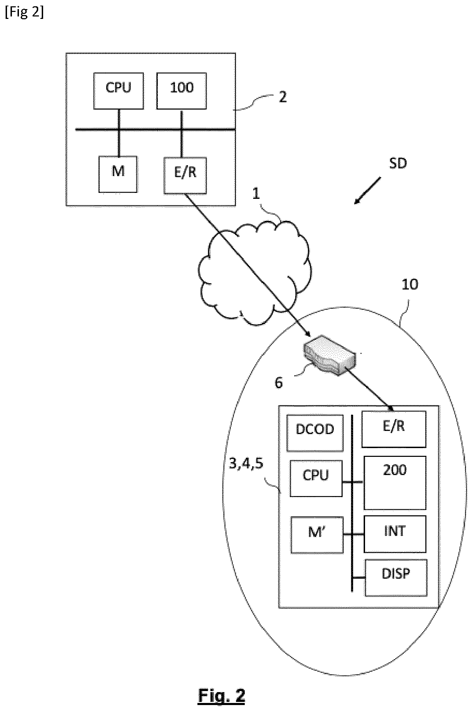

La figure 2 représente une architecture d'un équipement de service selon un mode de réalisation de l'invention, par exemple un serveur de contenu tel que décrit en figure 1.

Il comprend, classiquement, des mémoires M associées à un processeur CPU. Les mémoires peuvent être de type ROM (de l'anglais *« Read Only Memory »*) ou RAM (de l'anglais *« Random Access Memory »*) ou encore Flash. L'équipement de service 2, aussi appelé par la suite équipement serveur 2, communique avec le réseau Internet étendu 1 et notamment avec d'autres équipements de service (non représentés) impliqués dans la mise en oeuvre du ou des services de diffusion de contenus numériques considérés. Il communique aussi avec le terminal client 3, 4, 5 via la passerelle résidentielle 6 par l'intermédiaire d'un module d'émission-réception E/R.

Selon cet exemple de réalisation de l'invention, l'équipement serveur 2 comprend un dispositif 100 de génération d'une chaîne de télévision numérique virtuelle pour l'utilisateur du terminal client 3, 4, 5. Un tel dispositif de génération 100 est configuré pour :
- obtenir des informations descriptives, ou métadonnées, associées au contenu lui-même (par exemple : titre, description, catégorie, type de contenu tel que live ou VOD, durée, qualité vidéo ...) ;
- sélectionner à partir des informations descriptives obtenues, parmi différents type de contenus audiovisuels disponibles pour cet utilisateur, un contenu audiovisuel répondant à un ou des critère(s) de sélection ; et
- sur réception d'une demande d'accès à la chaîne de télévision personnalisée en provenance de l'utilisateur, transmettre au terminal de l'utilisateur le contenu audiovisuel sélectionné, afin qu'il le restitue à l'utilisateur comme un programme de la chaîne personnalisée.

En particulier, le dispositif de génération 100 est configuré pour sélectionner en priorité parmi une pluralité de contenus audiovisuels en cours de diffusion (c'est-à-dire des contenus audiovisuels programmés dans une grille de programmes télévisuels, aussi appelés par la suite « contenus audiovisuels programmés »), et accessibles à l'utilisateur, un contenu audiovisuel programmé dans une grille de programmes télévisuels, répondant au(x) critère(s) de sélection. Les contenus de type « programme télévisuel » peuvent être des contenus « live », c'est-à-dire des contenus retransmis en direct lors de la programmation sur une chaîne télévisuelle (par exemple un match de football qui se déroule au même moment que la retransmission), ou bien des contenus diffusés selon un créneau horaire programmé que l'utilisateur regarde au moment de la diffusion sur ce créneau horaire.

Si aucun contenu audiovisuel programmé ne peut être sélectionné, alors le dispositif 100 est configuré pour lancer une nouvelle recherche de contenu audiovisuel, cette fois-ci parmi une autre pluralité de contenus audiovisuels de nature différente, comprenant notamment des contenus audiovisuels programmés préalablement enregistrés et sauvegardés dans une mémoire, par exemple dans la mémoire M de l'équipement serveur 2.

Le dispositif de génération 100 est donc également configuré pour enregistrer, au moins périodiquement voire en continu, des contenus audiovisuels de type programme télévisuel répondant au(x) critère(s) de sélection parmi une pluralité de contenus de ce type. Les contenus audiovisuels programmés peuvent être enregistrés par exemple dans les mémoires M de l'équipement de service 2 ou dans une mémoire externe hébergée par un autre équipement du réseau de télécommunications WAN 1. Alternativement, il est possible d'enregistrer les contenus audiovisuels programmés dans un espace d'enregistrement situé dans le « *cloud* » (« nuage » en anglais) sur un réseau de type PVR (« *Personal Video Recorder* » en anglais).

Ce ou ces contenu(s) audiovisuel(s) programmés, préalablement enregistrés, sont supprimés de la mémoire lorsqu'au moins une condition de suppression est satisfaite, ladite au moins une condition de suppression appartenant à un groupe comprenant :
- une période temporelle est écoulée ;
- une capacité de stockage de la mémoire est atteinte ;
- le contenu audiovisuel programmé préalablement enregistré a été restitué par le terminal de l'utilisateur comme programme de la chaîne de télévision virtuelle.

Avantageusement, le dispositif 100 est configuré pour mettre en oeuvre la construction par apprentissage d'un modèle d'analyse et de sélection des contenus audiovisuels accessibles à l'utilisateur en fonction du ou des critère(s) de sélection. L'application de ce modèle d'analyse et de sélection par le dispositif de génération 100 permet alors de sélectionner de manière automatique des contenus audiovisuels susceptibles de plaire à l'utilisateur sur la base de critères de sélection à réception d'une demande d'accès à la chaîne virtuelle.

Ce critère de sélection peut être un critère de préférence de l'utilisateur. Dans ce cas, le dispositif 100 est configuré pour obtenir des critères de préférence de l'utilisateur. Les critères de préférence peuvent être enregistrées par exemple dans les mémoires M de l'équipement de service 2 ou dans une mémoire externe hébergée par un autre équipement du réseau de télécommunications WAN 1.

Alternativement, ce critère de sélection peut être une thématique récurrente identifiée à l'aide des informations descriptives associées aux contenus audiovisuels accessibles à l'utilisateur. Dans ce cas, le dispositif 100 est alors configuré pour identifier, à partir d'informations descriptives des contenus audiovisuels accessibles de grilles de programmes télévisuels à venir, une ou des thématiques récurrentes.

En variante, le critère de sélection peut être à la fois un critère de préférence et une thématique récurrente.

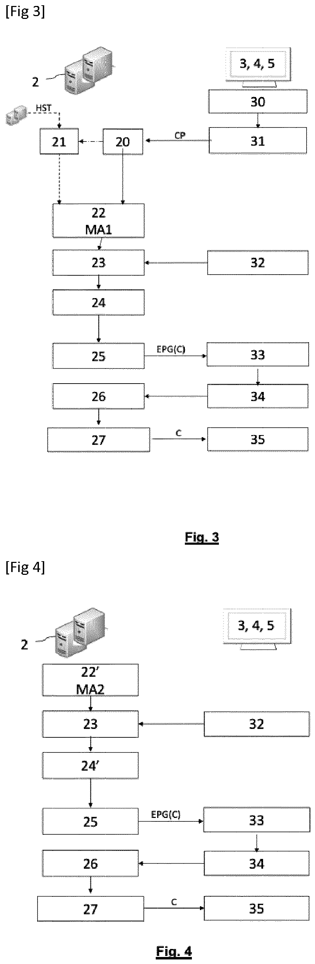

Le dispositif 100 met ainsi en oeuvre le procédé de génération d'une chaîne de télévision virtuelle selon l'invention qui sera détaillé ci-après en relation avec les figures 3 et 4.

Alternativement, le dispositif 100 peut être indépendant de l'équipement de service 2, mais connecté à celui-ci par une liaison quelconque, filaire ou non. Par exemple, il est intégré à un autre équipement du réseau de télécommunications étendu 1, par exemple un autre équipement de service. Selon un autre mode de réalisation de l'invention, il peut être intégré à un équipement du réseau local LAN 10, par exemple à la passerelle 6, ou bien un décodeur numérique (« *Set Top Box* »). Selon cet autre mode de réalisation, la mémoire dans laquelle les contenus audiovisuels programmés sont enregistrés peut être une mémoire locale du réseau LAN 10, par exemple un disque dur, intégré ou non à un équipement de ce réseau local.

La figure 2 représente aussi une architecture d'un équipement terminal 3, 4, 5 selon un mode de réalisation de l'invention. Il s'agit par exemple du téléviseur 5 de la figure 1.

Il comprend, classiquement, des mémoires M' associées à un processeur CPU. Les mémoires peuvent être de type ROM (de l'anglais *« Read Only Memory »*) ou RAM (de l'anglais *« Random Access Memory »*) ou encore Flash. L'équipement terminal 3, 4, 5 communique avec la passerelle résidentielle 6 et accède au réseau Internet étendu 1 via cette passerelle 6, ce qui lui permet notamment de communiquer avec des équipements de service tels que le serveur 2, impliqués dans la mise en oeuvre du service de diffusion de contenus audiovisuels considéré. L'équipement terminal 5 communique avec le réseau local LAN 10 avec d'autres équipements du réseau local et notamment la passerelle 6 par l'intermédiaire de laquelle il accède au réseau Internet étendu 1 et notamment à l'équipement service 2 impliqué dans la mise en oeuvre du service de diffusion de contenus audiovisuels considéré. Avantageusement, il comprend aussi un module DCOD de décodage de flux de données codées représentatives d'un contenu audiovisuel diffusé par le service considéré et un module INT d'interface avec l'utilisateur par l'intermédiaire duquel notamment ce dernier sélectionne une chaîne de télévision ou un contenu audiovisuel. Il s'agit par exemple d'une télécommande, d'un écran tactile etc. Il comprend enfin un dispositif DISP d'affichage de contenus audiovisuels, comme par exemple le téléviseur 5 ou un moniteur.

Selon cet exemple de réalisation de l'invention, le terminal 3, 4, 5 comprend un dispositif 200 de traitement d'une demande d'accès de l'utilisateur à la chaîne de télévision personnalisée. Un tel dispositif est configuré notamment pour collecter des critères de préférence de l'utilisateur, lorsque le critère de sélection correspond aux critères de préférence, les transmettre à l'équipement serveur 2, transmettre à l'équipement serveur 2 la demande d'accès à la chaîne de télévision virtuelle en provenance de l'utilisateur, recevoir le contenu audiovisuel sélectionné pour la chaîne virtuelle et restituer à l'utilisateur ce contenu audiovisuel sélectionné, en réponse à ladite demande d'accès.

Les critères de préférence de l'utilisateur sont par exemple saisis par l'intermédiaire du module d'interface INT. Une fois collectés, ils peuvent être enregistrées par exemple dans les mémoires M'de l'équipement terminal 5 ou dans une mémoire externe hébergée par un autre équipement du réseau local LAN 10.

Alternativement, le dispositif de traitement 200 peut être indépendant de l'équipement terminal 5, mais connecté à celui-ci par une liaison quelconque, filaire ou non. Par exemple, il peut être intégré à un autre équipement terminal du réseau de communication local, par exemple la passerelle domestique 6.

On présente désormais, en relation avec les figures 3 et 4, sous forme de logigrammes, des exemples de mise en oeuvre d'un procédé de génération d'une chaîne de télévision virtuelle pour un utilisateur, selon des modes de réalisation de l'invention.

Selon ces modes de réalisation, le contenu audiovisuel diffusé par la chaîne virtuelle est sélectionné en fonction d'un ou plusieurs critère(s) de sélection sur requête de l'utilisateur. Autrement dit, la construction de la chaîne virtuelle se fait suite à la réception d'une requête d'accès à ladite chaîne virtuelle par l'utilisateur.

En outre, dans ce qui suit, le procédé de génération est mis en oeuvre par le dispositif 100 précité, intégré dans un équipement de service 2, comme par exemple un serveur de contenu. Bien sûr, l'invention ne se limite pas à cet exemple de réalisation, le dispositif 100 pouvant être intégré dans un équipement du réseau local LAN 10, comme par exemple la passerelle 6 ou un décodeur numérique (« *Set Top Box* »)*.*

On suppose aussi que l'utilisateur du terminal 5 accède à au moins un service de diffusion de contenu audiovisuel d'un opérateur de service, par exemple un service de diffusion en direct de chaînes de télévision S1. Optionnellement, il peut aussi bénéficier d'un accès à un service S2 de rediffusion de contenus numériques déjà diffusés en mode rattrapage et à un service S3 de location de vidéo à la demande, etc.

On note que l'accès à chacun de ces services peut être soumis ou non à souscription préalable. Autrement dit, l'invention s'applique aussi bien aux chaînes de la TNT qu'à des services de diffusion de contenus payants, par exemple via des plateformes de vidéo à la demande.

On suppose aussi que l'équipement serveur 2 contribue à la mise en oeuvre de ces différents services.

En relation avec la figure 3, on décrit un premier mode de réalisation de l'invention selon lequel le contenu audiovisuel programmé par la chaîne virtuelle est sélectionné en fonction d'un critère de sélection correspond à des critères de préférence de l'utilisateur.

Selon cet exemple de réalisation, l'utilisateur peut définir des préférences permettant au dispositif 100 de l'équipement serveur 2 de construire une chaîne virtuelle diffusant des contenus audiovisuels personnalisés. Ces préférences peuvent être par exemple :
- des contenus portant sur le « Sport » ;
- des contenus de type « Reportage » ;
- des contenus de type « Séries » ;
- des contenus relatifs à la « Musique », etc.

Avantageusement ces critères de préférence comprennent une pluralité de caractéristiques de contenus audiovisuels appréciés ou préférés de l'utilisateur qu'il peut alors associer à une chaîne virtuelle. Elles définissent donc un ou plusieurs thèmes ou sujets, tels que le sport, les voyages, le cinéma, etc, un type de contenu tel qu'un film, une série, un documentaire, un journal télévisé, d'un genre de film, comme une comédie, un thriller, etc, d'un niveau de violence ou d'action, d'un ou plusieurs acteurs ou présentateurs intervenant dans le contenu, d'un créneau horaire associé à un type de contenu particulier, etc.

Les préférences de l'utilisateur sont par exemple stockées dans une mémoire M de l'équipement serveur 2, en association avec un identifiant de l'utilisateur.

En 30, le terminal utilisateur 5 obtient des critères de préférences de la part de l'utilisateur en vue de la génération de sa chaîne de télévision virtuelle.

Selon un premier exemple de réalisation, l'obtention des critères de préférences CP se fait de manière déclarative dans une phase initiale de configuration des préférences de l'utilisateur pour la création de sa chaîne virtuelle. Par exemple, le terminal 5 présente à l'utilisateur un formulaire, comprenant des questions, que l'utilisateur remplit à l'aide de l'interface INT de saisie, par exemple un écran tactile, un clavier, une télécommande, etc.

Le terminal utilisateur 5 transmet en 31 les critères de préférences CP obtenus à l'équipement serveur 2, qui les reçoit en 20. On note que ce dernier peut avoir sollicité ou non l'envoi de ces informations CP par le terminal 5.

Selon un deuxième exemple de réalisation, en 21, le dispositif 100 obtient un historique HST des usages ou consommations de l'utilisateur sur les différents services proposés par l'opérateur. On suppose par exemple que pour ce faire, il requiert l'accès à de telles données auprès d'un autre équipement de service de l'opérateur, qui gère une base de données dédiée au stockage de ces historiques d'usages des utilisateurs.

L'historique HST regroupe des informations datées sur les contenus audiovisuels que l'utilisateur a visualisés ou écoutés, au moins partiellement, depuis l'équipement terminal 5 ou un autre terminal configuré pour accéder aux services de l'opérateur, au cours d'une période temporelle passée. Il s'agit notamment d'identifiants de chaînes, d'identifiants de programmes, éventuellement d'un nombre de visualisations ou d'un pourcentage du contenu visualisé, etc.

Dans l'exemple de réalisation de la figure 3, le procédé comprend en 22 la construction d'un modèle d'analyse et de sélection de contenus MA1 basé sur les critères de préférence CP obtenus à partir d'une déclaration de l'utilisateur et/ou à partir d'un historique HST. En effet, l'analyse de l'historique de consommation de contenus de l'utilisateur peut venir compléter et enrichir les critères de préférence CP explicitement fournis par l'utilisateur.

La construction de ce modèle d'analyse et de sélection MA1 se fait, par exemple, par apprentissage ou entraînement d'un module de décision automatique du dispositif 100.

Le modèle d'analyse et de sélection MA1 permet au dispositif 100, dans une phase d'analyse des informations descriptives des contenus audiovisuels accessibles à l'utilisateur, de sélectionner en 24, parmi des contenus audiovisuels de nature différente, et disponibles pour cet utilisateur, au moins un contenu audiovisuel qui correspond aux critères de préférences CP de l'utilisateur.

On note que l'apprentissage du modèle MA1 et l'analyse des contenus audiovisuels à l'aide du modèle MA1 sont ici présentés en deux temps, ou en deux phases distinctes, par simplicité. Il est entendu cependant que l'apprentissage peut être effectué plusieurs fois (notamment en parallèle ou après l'analyse) et que l'analyse peut être continue.

Dans la phase d'analyse, les contenus audiovisuels disponibles pour l'utilisateur sont analysés par le dispositif 100, qui est donc configuré pour prendre une décision pour chaque contenu audiovisuel, par exemple en lui attribuant un indice de compatibilité avec les critères de préférence de l'utilisateur, la valeur de cet indice augmentant avec le niveau de compatibilité analysé.

En 32, le terminal 5 transmet à l'équipement serveur 2 une commande d'accès à la chaîne virtuelle. Elle est reçue en 23 et déclenche la sélection 24 d'un contenu audiovisuel parmi les contenus audiovisuels disponibles pour l'utilisateur.

Le dispositif 100, grâce au modèle d'analyse MA1, sélectionne parmi différents contenus audiovisuels accessibles à l'utilisateur celui ou ceux qui correspondent à ses critères de préférences.

Pour cela, le dispositif 100 recherche dans différents ensembles de contenus audiovisuels un contenu qui répond au critère de sélection, dans l'exemple présent, un ou des critères de préférence de l'utilisateur. Les différents ensembles de contenus audiovisuels sont hiérarchisés en fonction de la nature des contenus audiovisuels qui les composent.

En effet, la sélection d'un contenu audiovisuel répondant aux critères de préférence de l'utilisateur est mise en oeuvre prioritairement parmi des contenus audiovisuels en cours de diffusion, ou programmés. Ainsi, dès lors que l'utilisateur requiert l'accès à sa chaîne virtuelle, un contenu audiovisuel actuellement en cours de diffusion (c'est-à-dire diffusé selon une grille de programmation) répondant au(x) critère(s) de préférence de l'utilisateur est sélectionné pour sa restitution.

Dans certains cas, le terminal 5 peut bénéficier de fonctionnalités de type « Start Over » (ou reprise au début en anglais) lui permettant de reprendre au début le contenu audiovisuel programmé sélectionné.

Dans l'éventualité où aucun contenu audiovisuel programmé ne répond au(x) critère(s) de préférence de l'utilisateur et ne peut donc être sélectionné, le dispositif 100 recherche alors parmi d'autres ensembles de contenus audiovisuels. En particulier, il favorise une nouvelle sélection parmi des contenus audiovisuels programmés préalablement enregistrés et sauvegardés dans une mémoire, par exemple la mémoire M de l'équipement serveur 2.

En effet, le dispositif 100 analyse en continu les informations descriptives des contenus audiovisuels programmés dans les grilles de programmes télévisuels afin d'identifier et sélectionner les contenus audiovisuels répondant au(x) critère(s) de préférence de l'utilisateur. Si un ou des contenus audiovisuels programmés ne peut être visualisé en direct par l'utilisateur, alors le dispositif 100 procède à l'enregistrement du ou des contenus audiovisuels sélectionnés. C'est le cas par exemple lorsque qu'un ou des contenus sont diffusés à des horaires tardives ou bien lorsque plusieurs contenus répondant au(x) critère(s) de préférence de l'utilisateur sont diffusés sur un même créneau horaire.

Autrement dit, une fois les préférences de l'utilisateur définies et associées à une chaine virtuelle, le dispositif 100 enregistre automatiquement, et en fonction des métadonnées associées aux contenus audiovisuels programmés, des contenus correspondant aux critères de préférences définis.

Ces contenus audiovisuels peuvent être enregistrés pour une durée limitée (par exemple 30 jours puis effacés automatiquement) et / ou dans une certaine limite d'occupation de la capacité de stockage de la mémoire de l'équipement et/ou après restitution du contenu en question.

Ainsi, quand l'utilisateur accède à sa chaine virtuelle (en zappant sur la chaine virtuelle), le dispositif 100 contrôle si dans les flux de contenus audiovisuels actuellement diffusés, un contenu répond aux critères de préférence. Si c'est le cas, ce contenu programmé en cours de diffusion est restitué à l'utilisateur. Si ce n'est pas le cas, le dispositif 100 diffuse alors le dernier contenu enregistré qui correspond aux critères de préférence. Un fois ce contenu lu, il est effacé automatiquement de la mémoire et le processus est de nouveau appliqué.

Si aucun contenu programmé ou enregistré n'est disponible au moment où l'utilisateur souhaite accéder à sa chaîne virtuelle, le dispositif recherche alors parmi d'autres ensembles de contenus audiovisuels disponibles pour l'utilisateur, tels que les contenus de type rediffusion (« *replay* »), ou de vidéo à la demande (VOD).

On suppose qu'un contenu audiovisuel C a été sélectionné. Les informations EPG(C) relatives à ce contenu audiovisuel sélectionné pour l'utilisateur, par exemple son identifiant et, le cas échéant, l'identifiant de la chaîne de télévision d'origine ou du service qui le met à disposition (rattrapage ou vidéo à la demande par exemple) sont transmises en 25 au terminal 5 qui les reçoit en 33. Plus généralement, ces informations comprennent toutes les informations nécessaires pour que le terminal 5 puisse requérir l'accès au contenu C.

Par exemple, le terminal 5 les restitue à l'utilisateur afin qu'il décide s'il veut ou non visualiser le contenu C programmé.

On suppose que l'utilisateur confirme son choix de visualiser ce contenu C.

A l'aide de ces informations, le terminal 5 requiert en 34 l'accès au contenu C, de façon classique, auprès du service qui le proposait initialement. A réception de cette requête en 26, l'équipement serveur 2 transmet le contenu C au terminal en 27, puis le terminal 5 le restitue à l'utilisateur en 35 comme s'il s'agissait d'un programme de sa chaîne virtuelle.

Par exemple, l'utilisateur a défini un critère de préférence « Sport/Foot » pour la sélection de contenus audiovisuels. Un match de football est diffusé en direct sur la chaîne Beln1 à partir de 20h30, un match de football est diffusé en direct sur la chaîne Beln2 à partir de 21h30, et un contenu audiovisuel répondant aux critères « Sport/foot » a été enregistré la veille sur la chaîne TF1.

Lors du zapping à 20h35 sur la chaîne virtuelle, on lui propose donc en priorité le contenu programmé en cours de diffusion correspondant le mieux à ses préférences, c'est-à-dire du contenu de type « Sport/Foot » (dans le cas présent le match sur Beln1). A la fin du match, et sans que l'utilisateur n'ait eu à zapper, le contenu « Sport/Foot » de la chaîne Beln2 lui est automatiquement proposé. Si la chaîne supporte le « Start Over », on lui propose de visualiser le match depuis le début, donc avec un différé, sinon de reprendre en cours la diffusion du match de football en direct. À la fin de la diffusion du match diffusé en direct, si plus aucun contenu actuellement en cours de diffusion ne répond au critère « Sport/Foot », alors un contenu audiovisuel qui a été diffusé la veille sur TF1, mais non visualisé par l'utilisateur (par exemple le match de football passait pendant les horaires de bureau de l'utilisateur) et qui a été préalablement enregistré, est diffusé.

En relation avec la figure 4, on décrit un deuxième mode de réalisation de l'invention selon lequel le contenu audiovisuel diffusé par la chaîne virtuelle est sélectionné en fonction d'une thématique récurrente identifiée à partir des informations descriptives des contenus audiovisuels programmés dans une grille de programmes télévisuels à venir.

Dans l'exemple de réalisation de la figure 4, le procédé comprend donc en 22' la construction d'un modèle d'analyse et de sélection MA2 qui analyse, dans une phase initiale, les informations descriptives, ou métadonnées, de contenus audiovisuels accessibles à l'utilisateur : programmés dans des grilles de programmes à venir, disponibles en « replay » ou encore disponible en vidéo à la demande. Ce modèle d'analyse et de sélection MA2 identifie alors au cours de cette phase initiale ,des thématiques récurrentes, par exemple par l'analyse de mots clés dans les informations descriptives des contenus audiovisuels, notamment des contenus de type programmés. L'identification d'une thématique se fait également par analyse des informations descriptives de contenu de type « replay » ou de type vidéo à la demande.

Pour cela, le modèle d'analyse et de sélection MA2 utilise notamment un critère d'occurrence prédéterminé. Ce critère d'occurrence est un entier compris entre 0 et N, correspondant à un nombre de fois où l'on retrouve la thématique après analyse des informations descriptives. Par exemple, un certain nombre de fois où des mots clés apparaissent dans les informations descriptives des contenus audiovisuels. Ainsi, on considère qu'à partir d'un certain nombre ou seuil d'apparitions de la thématique (par exemple, comptabilisé à partir d'un nombre d'apparitions de mots clés préalablement identifiés comme représentatifs de la thématique) dans les informations descriptives des contenus audiovisuels, alors on considère que la thématique revient régulièrement et est donc identifiée comme récurrente. Si au contraire, le nombre d'apparitions de la thématique est en dessous de ce seuil d'apparitions, on considère alors que la thématique n'est pas récurrente ou n'est plus récurrente car elle tend à disparaître des informations descriptives une fois l'événement passé.

Ce modèle d'analyse et de sélection MA2 permet ensuite au dispositif 100, dans une phase d'analyse des informations descriptives des contenus audiovisuels accessibles à l'utilisateur, de sélectionner en 24', parmi une pluralité de contenus audiovisuels disponibles pour cet utilisateur, des contenus audiovisuels qui traitent de thématiques communes.

On note que l'apprentissage du modèle MA2 et l'analyse des contenus audiovisuels à l'aide du modèle MA2 sont ici présentés en deux temps, ou en deux phases distinctes, par simplicité. Il est entendu cependant que l'apprentissage peut être effectué plusieurs fois (notamment en parallèle ou après l'analyse) et que l'analyse peut être continue.

Ainsi, suite à l'identification de thématiques récurrentes, le dispositif 100, grâce au modèle d'analyse MA2, recherche parmi différents ensembles de contenus audiovisuels (ensemble de contenus audiovisuel en cours de diffusion, enregistrés, en rediffusion, ou de vidéo à la demande) et sélectionne parmi ces différents contenus audiovisuels accessibles à l'utilisateur, le ou les contenus audiovisuels qui correspondent aux thématiques récurrentes identifiées. La sélection est identique à celle décrite à l'étape 24 décrite en lien avec la figure 3, à la différence que le critère de sélection dans l'exemple de la figure 4 est une thématique récurrente et non un critère de préférence de l'utilisateur. Autrement dit, le dispositif 100 commence par rechercher un contenu audiovisuel répondant à une thématique récurrente parmi les contenus programmés, puis si aucun contenu audiovisuel programmé ne peut être sélectionné, alors il répète sa recherche cette fois-ci parmi les contenu audiovisuels programmé préalablement enregistrés. Si aucun contenu audiovisuel programmé ou programmé enregistré n'a pu être sélectionné, alors le dispositif 100 recherche un contenu à sélectionner parmi les contenus audiovisuels disponibles en rediffusion (« replay »), puis, si nécessaire, parmi les contenus audiovisuels disponibles en vidéo à la demande.

Les étapes 32, 23, 25 à 27 et 33 à 35 sont inchangées.

En variante, les modes de réalisation décrits en lien avec la figure 3 et en lien avec la figure 4 sont combinés, tel que le critère de sélection est à la fois un critère de préférence et une thématique récurrente. L'utilisateur peut alors bénéficier d'un large panel de chaînes virtuelles qui, selon la configuration choisie par l'utilisateur, sont basées sur ses critères de préférence, des thématiques récurrentes ou les deux.

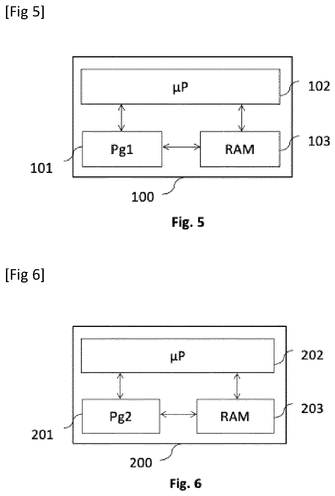

On présente maintenant, en relation avec la figure 5, un exemple de structure matérielle d'un dispositif 100 de génération d'une chaîne de télévision virtuelle pour un utilisateur d'un service d'accès à des contenus multimédia. Ce dispositif de génération 100 est configuré pour obtenir des critères de préférences de l'utilisateur et/ou d'identifier des thématiques récurrentes, sélectionner, à partir du critère de sélection, un contenu audiovisuel parmi différentes pluralités de contenus audiovisuels disponibles pour cet utilisateur, réceptionner une demande d'accès à la chaîne virtuelle en provenance de l'utilisateur et mettre à disposition le contenu audiovisuel sélectionné sur la chaîne de télévision virtuelle.

Plus généralement, un tel dispositif 100 comprend une mémoire vive 103 (par exemple une mémoire RAM), une unité de traitement 102 équipée par exemple d'un processeur, et pilotée par un programme d'ordinateur Pg1, représentatif des modules d'obtention, de sélection, de réception et de mise à disposition, stocké dans une mémoire morte 101 (par exemple une mémoire ROM ou un disque dur). A l'initialisation, les instructions de code du programme d'ordinateur sont par exemple chargées dans la mémoire vive 103 avant d'être exécutées par le processeur de l'unité de traitement 102. Dans un exemple de réalisation, la mémoire vive 103 peut aussi contenir les critères de préférences de l'utilisateur, les thématiques récurrentes et des contenus audiovisuels programmés préalablement enregistrés.

La figure 5 illustre seulement une manière particulière, parmi plusieurs possibles, de réaliser le dispositif 100 afin qu'il effectue les étapes du procédé de génération d'une chaîne de télévision virtuelle pour l'utilisateur tel que détaillé ci-dessus, en relation avec les figures 3 à 4, dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 100 est réalisé avec une machine de calcul reprogrammable, le programme correspondant (c'est-à-dire la séquence d'instructions) pourra être stocké dans un médium de stockage amovible (tel que par exemple une carte SD, une clé USB, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif 100 intégré dans un équipement serveur 2 d'un réseau de télécommunications WAN 1 d'un opérateur, mais il peut aussi être intégré dans une passerelle domestique ou professionnelle 6 d'accès à ce réseau WAN 1 et configurée pour gérer un réseau local LAN 10 auquel se connecte le ou les équipements terminaux 3, 4, 5 de l'utilisateur, ou encore dans un décodeur numérique.

On présente aussi, en relation avec la figure 6, un exemple de structure matérielle d'un dispositif 200 de traitement d'une demande d'accès à une chaîne de télévision virtuelle pour un utilisateur d'un service d'accès à des contenus audiovisuels. Ce dispositif 200 est notamment configuré pour transmettre, le cas échéant, à un équipement de service impliqué dans la mise en oeuvre du service de critères de préférence de l'utilisateur, transmettre à l'équipement de service une demande d'accès à la chaîne de télévision virtuelle en provenance de l'utilisateur et restituer à l'utilisateur le contenu audiovisuel sélectionné pour la chaîne de télévision virtuelle.

Plus généralement, un tel dispositif 200 comprend une mémoire vive 203 (par exemple une mémoire RAM), une unité de traitement 202 équipée par exemple d'un processeur, et pilotée par un programme d'ordinateur Pg2, représentatif des modules d'obtention et de transmission, stocké dans une mémoire morte 201 (par exemple une mémoire ROM ou un disque dur). A l'initialisation, les instructions de code du programme d'ordinateur sont par exemple chargées dans la mémoire vive 203 avant d'être exécutées par le processeur de l'unité de traitement 202. La mémoire vive 203 peut aussi contenir les critères de préférences obtenus de l'utilisateur.

La figure 6 illustre seulement une manière particulière, parmi plusieurs possibles, de réaliser le dispositif 200 afin qu'il traite une demande d'accès de l'utilisateur à une chaîne virtuelle générée par le procédé selon l'invention tel que détaillé ci-dessus, en relation avec les figures 3 et 4 et dans ses différents modes de réalisation. En effet, ce traitement peut être réalisé indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 200 est réalisé avec une machine de calcul reprogrammable, le programme correspondant (c'est-à-dire la séquence d'instructions) pourra être stocké dans un médium de stockage amovible (tel que par exemple une carte SD, une clé USB, un CD-ROM ou un DVD-ROM) ou non, ce médium de stockage étant lisible partiellement ou totalement par un ordinateur ou un processeur.

L'invention qui vient d'être décrite dans ses différents modes de réalisation présente de nombreux avantages. En sélectionnant pour un utilisateur le meilleur contenu audiovisuel parmi une pluralité de contenus audiovisuels disponibles, elle génère pour cet utilisateur une chaîne de télévision virtuelle, sur la base de ses préférences et/ou de thématiques récurrentes.

L'utilisateur n'a plus qu'à se positionner sur sa chaîne de télévision virtuelle pour accéder directement à des contenus audiovisuels choisis pour lui, sans effort ni recherche fastidieuse.

L'invention propose en outre d'enregistrer en continu des contenus audiovisuels selon les critères de préférence de l'utilisateur et/ou des thématiques récurrentes de façon à pouvoir efficacement alimenter la chaine virtuelle à tout moment avec des contenus audiovisuels adaptés.

## Revendications

1. Procédé de génération d'une chaîne de télévision accessible depuis un terminal configuré pour accéder à au moins un service de diffusion de contenus audiovisuels, lesdits contenus audiovisuels pouvant être des contenus audiovisuels dont des contenus en cours de diffusion, ledit procédé comprenant :
- une sélection (24, 24') d'un contenu audiovisuel en fonction d'au moins un critère de sélection et d'informations descriptives associées auxdits contenus audiovisuels; le contenu audiovisuel sélectionné étant prioritairement un contenu en cours de diffusion ;
- un ajout du contenu sélectionné à la chaîne de télévision.

2. Procédé de génération selon la revendication 1 comprenant en outre :
- lorsqu'aucun contenu audiovisuel en cours de diffusion n'est sélectionné, une sélection (24, 24'), parmi une pluralité de contenus audiovisuels, et accessibles depuis le terminal de l'utilisateur par ledit au moins un service, d'au moins un autre contenu audiovisuel, en fonction dudit au moins un critère de sélection et d'informations descriptives associées auxdits contenus audiovisuels;
- sur réception (23) d'une demande d'accès à ladite chaîne de télévision virtuelle en provenance dudit terminal de l'utilisateur, une transmission (27), en vue de sa restitution (35) par ledit terminal dudit utilisateur comme programme de ladite chaîne virtuelle :
(i) dudit contenu audiovisuel sélectionné, s'il est en cours de diffusion; et
(ii) dudit au moins un autre contenu audiovisuel sinon.

3. Procédé de génération selon la revendication 2, **caractérisé en ce qu'il** comprend en outre un enregistrement dudit contenu audiovisuel en cours de diffusion sélectionné, dit contenu audiovisuel diffusé préalablement enregistré, dans une mémoire et **en ce que** ladite au moins une autre pluralité de contenus audiovisuels comprend ledit contenu audiovisuel diffusé préalablement enregistré.

4. Procédé de génération selon l'une quelconque des revendications 2 et 3, **caractérisé en ce qu'**il comprend en outre une obtention (20) d'au moins un critère de préférence dudit utilisateur, et ledit au moins un critère de sélection comprend ledit au moins un critère de préférence dudit utilisateur.

5. Procédé de génération selon l'une quelconque des revendications 1 à 4, **caractérisé en ce que** ledit procédé comprend une détermination d'au moins une thématique, dite récurrente, à partir d'informations descriptives de contenus audiovisuels programmés dans au moins une grille de télévision sur une période temporelle donnée et d'un critère d'occurrence prédéterminé et ledit au moins un critère de sélection comprend ladite thématique récurrente.

6. Procédé de génération selon les revendications 3 à 5, **caractérisé en ce que** ladite au moins une autre pluralité de contenus audiovisuels parmi laquelle ladite sélection dudit au moins un autre contenu audiovisuel est mise en oeuvre comprend en outre :
- des contenus audiovisuels disponibles en rediffusion, si aucun contenu audiovisuel en cours de diffusion et aucun contenu audiovisuel diffusé préalablement enregistré ne peut être sélectionné;
- des contenus audiovisuels accessibles à la demande, si aucun contenu audiovisuel disponible en rediffusion ne peut être sélectionné.

7. Procédé de génération selon les revendications 3 à 6, **caractérisé en ce que** ledit contenu audiovisuel diffusé préalablement enregistré est supprimé de ladite mémoire lorsqu'au moins une condition de suppression est satisfaite, ladite au moins une condition de suppression appartenant à un groupe comprenant :
- une période temporelle est écoulée ;
- une capacité de stockage de la mémoire est atteinte ;
- ledit contenu audiovisuel diffusé préalablement enregistré a été restitué par ledit terminal dudit utilisateur comme programme de ladite chaîne de télévision virtuelle.

8. Dispositif de génération d'une chaîne de télévision (100) accessible depuis un terminal configuré pour accéder à au moins un service de diffusion de contenus audiovisuels, lesdits contenus audiovisuels pouvant être des contenus audiovisuels dont des contenus en cours de diffusion, ledit dispositif étant configuré pour :
- sélectionner (24, 24') un contenu audiovisuel en fonction d'au moins un critère de sélection et d'informations descriptives associées auxdits contenus audiovisuels; le contenu audiovisuel sélectionné étant prioritairement un contenu en cours de diffusion;
- ajouter le contenu sélectionné à ladite chaîne de télévision.

9. Dispositif de génération (100) selon la revendication 8, **caractérisé en ce qu'**il est en outre configuré pour :
- lorsqu'aucun contenu audiovisuel en cours de diffusion n'est sélectionné, sélectionner (24, 24'), parmi au moins une autre pluralité de contenus audiovisuels, et accessibles depuis le terminal de l'utilisateur par ledit au moins un service, au moins un autre contenu audiovisuel, en fonction dudit au moins un critère de sélection et d'informations descriptives associées auxdits contenus audiovisuels;
- sur réception (23) d'une demande d'accès à ladite chaîne de télévision virtuelle en provenance dudit terminal de l'utilisateur, transmettre (27), en vue de sa restitution (35) par ledit terminal dudit utilisateur comme programme de ladite chaîne virtuelle :
(i) dudit contenu audiovisuel sélectionné, si il est en cours de diffusion; et
(ii) dudit au moins un autre contenu audiovisuel sinon.

10. Dispositif de génération (100) selon la revendication 8, **caractérisé en ce qu'**il est en outre configuré pour enregistrer ledit contenu audiovisuel en cours de diffusion sélectionné, dit contenu audiovisuel diffusé préalablement enregistré, dans une mémoire et **en ce que** ladite au moins une autre pluralité de contenus audiovisuels comprend ledit contenu audiovisuel diffusé préalablement enregistré.

11. Dispositif de génération (100) selon l'une quelconque des revendications 8 à 10, **caractérisé en ce qu'**il est configuré pour obtenir (20) au moins un critère de préférence dudit utilisateur, et ledit au moins un critère de sélection comprend ledit au moins un critère de préférence dudit utilisateur.

12. Dispositif de génération (100) selon l'une quelconque des revendications 8 à 11, **caractérisé en ce qu'**il est configuré pour déterminer au moins une thématique, dite récurrente, à partir d'informations descriptives de contenus audiovisuels programmés dans au moins une grille de télévision sur une période temporelle donnée et d'un critère d'occurrence prédéterminé et ledit au moins un critère de sélection comprend ladite thématique récurrente.

13. Équipement de service (2) impliqué dans la mise en oeuvre d'au moins un service de diffusion de contenus audiovisuels à un utilisateur, ledit équipement de service comprenant un dispositif de génération d'une chaîne de télévision virtuelle pour ledit utilisateur selon les revendications 8 à 12.

14. Support d'enregistrement lisible par un ordinateur sur lequel est enregistré un programme d'ordinateur comprenant des instructions de code de programme pour l'exécution des étapes du procédé selon l'une quelconque des revendications 1 à 7.

15. Programme d'ordinateur comprenant des instructions de code de programme pour la mise en oeuvre d'un procédé selon l'une quelconque des revendications 1 à 7, lorsqu'il est exécuté par un processeur.
